# EUROPEAN PATENT APPLICATION

(11) **EP 1 887 448 A1**
(43) Date of publication of application: **13.02.2008**
(21) Application number: 07110934.2
(22) Date of filing: 25.06.2007
(51) Int. Cl.: G05B 23/02, B29C 45/76

(54) **Core operation setting device for injection molding machine**

(30) Priority: 07.08.2006 JP 2006214785
(71) Applicant: Fanuc Ltd, Minamitsuru-gun, Yamanashi 401-0597 (JP)
(72) Inventor: Matsuo, Akimasa FANUC Manshonharimomi, Minamitsuru-gun Yamanashi 401-0511 (JP); Watanabe, Hiroshi, Fujiyoshida-shi Yamanashi 403-0004 (JP)
(74) Representative: Billington, Lawrence Emlyn

(57) **Abstract**

A "mold opening completion position," a "halfway position," and a "mold closing completion position" are set on a core operation setting screen associated with mold opening and closing operation. On the other hand, core insertion operation is divided into a plurality of elements (operation elements) including "core insertion output start," "core insertion check," and "core insertion output end." Likewise, core removal operation is divided into a plurality of elements (operation elements) including "core removal output start," "core removable check," and "core removable output end." One or more set items constituted by combination of the system of a core and the operation elements of the core are set with respect to each position.

## Description

### BACKGROUND OF THE INVENTION

### Field of the Invention

The present invention relates to a core operation setting device for setting the operation of a core in a mold of an injection molding machine.

### Description of the Related Art

In a mold with a core that is used in injection molding operation by an injection molding machine, the core is inserted or removed as the mold is closed or opened. In some cases, two or more cores which belong to different systems are used in injection molding. In a mold closing stroke, for example, a core of a first system is inserted before mold closing is started, a core of a second system is inserted in a halfway position in the course of mold closing, and a core of a third system is inserted after the mold closing is terminated. Then, injection, hold-pressure, metering and cooling processes are performed. In a mold opening stroke that follows these processes, the third-system core is removed before mold opening is started, the second-system core is removed in a halfway position in the course of mold opening, and the first-system core is removed after the mold opening is completed.

In the case described above, the core of one system (second system) is inserted in one position in the course of mold closing and removed in one position in the course of mold opening. In some more complicated cases, cores of a plurality of systems (2A-th, 2B-th, 2C-th, ...) may be inserted in a plurality of positions (first, second, third, ... position) in the course of mold closing and successively removed in those positions (first, second, third, ... position) in the course of mold opening.

As described above, there are settings associated with core operation, including (a) a setting associated with the operating position of a core and (b) a setting associated with the operation sequence of the core in each operating position. If the core is inserted with the setting (a), a position before the mold closing, a halfway position in the course of mold closing, and a position after the completion of the mold closing are set. If the core is removed with the same setting, a position before the mold opening, a halfway position in the course of mold opening, and a position after the completion of the mold opening are set.

If the cores of the plurality of systems are used, moreover, the settings for the operating position (a) and the operation sequence (b) must be performed for each system, which are complicated works.

Described in Japanese Patent Application Laid-Open No. 5-50479 (hereinafter referred to as Patent Document 1) is a technique for facilitating the setting of the operating position of the core and the like. According to this technique, a mold opening/closing optional operation setting mode screen, which includes an area for numerical value designation, a display area for "setting a mold opening progress sequence," and a display area for "setting a mold clamping progress sequence," is displayed on a display device of an injection molding machine. First, an operator designates a number N of suspension positions in the course of mold opening, a number M of suspension positions in the course of mold clamping (or mold closing), a number K of cores used, etc. Thereupon, a necessary number of operation item identification columns, such as "halfway 1 (mm)," "halfway 2 (mm)," ... "halfway N (mm)," "return core 1 (kgf)," "return core 2 (kgf)," ... "return core K (kgf)," and "mold opening completed (mm)," etc., are automatically displayed in the display area for "setting a mold opening progress sequence." Likewise, a necessary number of operation item identification columns, such as "halfway 1 (mm)," "halfway 2 (mm)," ... "halfway N (mm)," "insert core 1 (kgf)," "insert core 2 (kgf)," ... "insert core K (kgf)," and "mold clamping completed (mm)," etc., are automatically displayed in the display area for "setting a mold clamping progress sequence." Then, the operator successively assigns numbers, 1 first, to "sequence designating region" in each of the operation item identification columns that are displayed in the display area for "setting a mold opening progress sequence" (e.g., order 1 to "core K return" and order 2 to "halfway N"). Likewise, the operator successively assigns numbers, 1 first, to "sequence designating region" in each of the operation item identification columns that are displayed in the display area for "setting a mold clamping progress sequence" (e.g., order 1 to "core K insertion" and order 2 to "halfway 1") .

Proposed in Japanese Patent Application Laid-Open No. 5-169462 (hereinafter referred to as Patent Document 2), moreover, is a method in which an input operation screen for setting the core operation is displayed on a display unit and two core operating mechanisms are displayed discriminatively. In this method, "ON" is set when a core is to be actuated, and "OFF" is set when the core is not to be actuated. Further, it is set whether to insert the core before mold clamping or to do it after the mold clamping is completed and whether to remove the core after mold opening is stopped or to do it after the mold opening is started. It is also set whether or not to start the core removal in a designated position and whether to drive the core operating mechanisms hydraulically or pneumatically. Furthermore, it is set whether limit switches or elapsed times are used as means for confirming that the core is inserted into the mold so that it reaches a predetermined position and means for confirming that the core is removed from the mold so that it reaches a predetermined position. If the elapsed times are set for the purpose, both time for confirmation of the core insertion and time for removal of the core are set.

Proposed in Japanese Patent Application Laid-Open No. 2003-225925 (hereinafter referred to as Patent Document 3), moreover, is a method in which molding operation items, including operation items for core insertion and removal, are arranged in a lattice for each operation sequence number and molding operation is set by setting the issuance of operation commands by means of operation command buttons at intersection points of the lattice.

Core operation modes (core insertion and removal operations and starting positions therefor) must be set for each core system. The techniques described in Patent Documents 1 and 2 are configured to cope with an increase in number of the core systems or complicated methods of operation.

According to the technique described in Patent Document 1, however, the set number N of suspension positions in the course of mold opening, the order of the respective return operations of the K number of cores, the set M number of suspension positions in the course of mold clamping, and the order of the respective insertion operations of the K number of cores must be set independently of one another. Thus, the items to be set are so many that the setting operation is not easy. According to this patent document, moreover, only the set items "core return" and "core insertion" are set for the core operations. Therefore, further detailed setting of confirmation of core return and insertion or further detailed setting of termination of output of core turn and insertion, etc. cannot be performed.

According to the technique described in Patent Document 2, although the confirmation of core insertion and removal can also be set, the core of the system to be operated, from among the cores of the other systems, is selected. For the selected core, it must be set whether to start core insertion before mold clamping or to do it after mold clamping is completed and whether to start core removal after mold opening is stopped or to do it after mold opening is started, as a result, the setting operation is not easy. According to this technique, moreover, the start, confirmation and termination of core return and insertion are performed as a set, so that these items cannot be set independently (for example, only a confirmation of core insertion cannot be set). Thus, the setting operation is a comprehensive operation that is not based on detailed setting.

According to the inventions described in Patent Documents 1 and 2, moreover, a certain number of set items must inevitably be set even when the core systems are few and if the methods of operation are not very complicated.

According to the invention described in Patent Document 3, furthermore, core operations must be set as a part of a series of molding operations by means of the operation command buttons on a screen. Thus, the setting operation is too complicated to be suited for those cores which require many operations.

### SUMMARY OF THE INVENTION

A core operation setting device for an injection molding machine according to the present invention operates a core at a mold opening completion position, a mold closing completion position and at least one halfway position between the mold opening completion position and the mold closing completion position. The core operation setting device comprises means for setting the at least one halfway position between the mold opening completion position and the mold closing completion position, means for dividing a series of operations of the core into a plurality of operation elements and storing a plurality of set items constituted by combination of the system of a core and the operation elements of the core, and designating means for successively taking out necessary set items from the storage means with respect to the mold opening completion position, the mold closing completion position and the halfway position, thereby designating an operation sequence for the set items for each of the positions.

The operation elements may include at least starts and ends of removal and insertion operations for the core and checks of the operations.

According to the present invention, a series of operations of the core is divided into a plurality of operation elements, and one or more set items each being constituted by combination of the system and the operation elements of a core are assigned to a mold opening completion position, mold closing completion position and halfway position between those completion positions, with number assigned, with result that the operation of the core of an injection molding machine can be set precisely and easily in accordance with the forms of a mold and the core to be used.

### BRIEF DESCRIPTION OF THE DRAWINGS

The above and other objects and features of the present invention will be apparent from the ensuing description of embodiments with reference to the accompanying drawings, in which:
FIG. 1 is a schematic block diagram showing a mold clamping apparatus and a controller for controlling an injection molding machine, the controller constituting one embodiment of a core operation setting device according to the invention;
FIG. 2 shows a first example of a core operation setting screen associated with mold closing operation displayed on a display unit of a manual data input device with display (used to set core operations) in the controller (core operation setting device) of FIG. 1;
FIG. 3 shows an example of a core operation setting screen associated with mold opening operation displayed on the display unit;
FIG. 4 shows a second example of the core operation setting screen associated with mold closing operation displayed on the display unit; and
FIG. 5 is a diagram illustrating an example of a core operation storage table stored in the core operation setting device of FIG. 1.

### DETAILED DESCRIPTION OF THE PREFERRED EMBODIMENTS

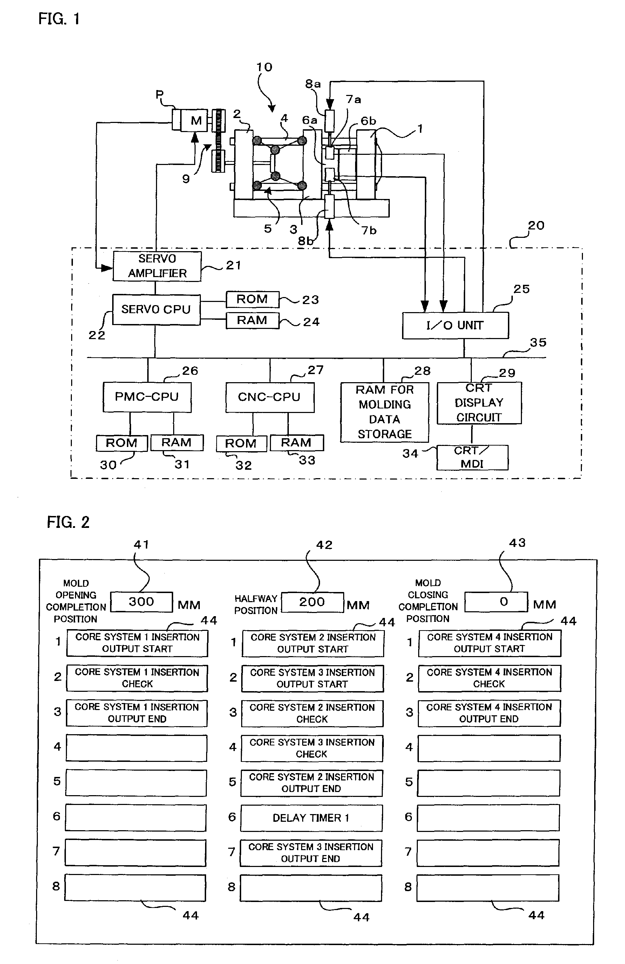

FIG. 1 shows one embodiment of a core operation setting device according to the present invention. As shown in FIG. 1, the core operation setting device is incorporated in a controller 20 for controlling an injection molding machine. A processor, a display and a storage unit of the controller 20 are used to set core operations. The storage unit is loaded with software for setting the core operations.

A mold clamping apparatus 10 shown in FIG. 1 is an example of a toggle-type mold clamping apparatus. A stationary platen 1 and a rear platen 2 are connected by a plurality of tie bars 4. A movable platen 3 that moves along the tie bars 4 is located between the stationary platen 1 and the rear platen 2. A stationary mold 6b and a movable mold 6a are mounted on the stationary platen 1 and the movable platen 3, respectively. In the example shown in FIG. 1, the movable mold 6a is provided with cores 7a and 7b of two systems. The cores 7a and 7b are configured to be drivingly controlled by hydraulic cylinders 8a and 8b.

A toggle mechanism 5 for mold clamping is provided between the rear platen 2 and the movable platen 3. The toggle mechanism 5 is driven to expand or contract by a servomotor M for mold clamping with the aid of a belt conveyor mechanism 9. More specifically, the movable platen 3 moves in the horizontal direction of FIG. 1 as the toggle mechanism 5 is driven by the servomotor M in rotation, thereby closing, clamping and opening the molds 6a and 6b, respectively. Further, the servomotor M is provided with a position/speed detector P, such as an encoder for detecting its rotational position and/or speed. The position of the movable mold 6a can be detected by means of the position/speed detector P.

The controller 20, which constitutes the core operation setting device, comprises a CNC-CPU 27 as a microprocessor for numerical control, a PMC-CPU 26 as a microprocessor for programmable machine controller, and a servo CPU 22 as a microprocessor for servo control. Information transmission between these microprocessors can be performed through a bus 35 by selecting mutual inputs and outputs.

The PMC-CPU 26 is connected with a ROM 30, which is stored with a sequential program for controlling sequential operation of the injection molding machine, etc., and a RAM 31 used for temporary storage of arithmetic operation data and the like. The CNC-CPU 27 is connected with a ROM 32 stored with an automatic operation program for generally controlling the injection molding machine and the like and a RAM 33 used for temporary storage of arithmetic operation data and the like.

Further, the servo CPU 22 is connected with a ROM 23, which is loaded with a dedicated control program for servo control for position loop processing, speed loop processing and current loop processing, and a RAM 24 used for temporary storage of data. Furthermore, the servo CPU 22 is connected with a servo amplifier, which controls servomotors for individual axes for mold clamping, injection, screw rotation, ejector operation, etc., based on commands from the servo CPU 22. Thus, outputs from position/speed detectors that are attached to the servomotors for the individual axes are fed back to the servo CPU 22. FIG. 1 shows only the servomotor M for driving the mold clamping apparatus, a servo amplifier 21 for driving the servomotor M, and the position/speed detector P for detecting the position/speed of the servomotor M.

An I/O unit 25 that is connected to the bus 35 is connected to sensors (limit switches, etc.) and actuators that are disposed in various parts of the injection molding machine body. According to the present invention, signals from sensors such as limit switches that are attached to the cores 7a and 7b are transmitted to the bus 35 through the I/O unit 25, and driving signals for the hydraulic cylinders 8a and 8b for driving the cores 7a and 7b are transmitted from the bus 35 through the I/O unit 25.

A manual data input device with display (CRT/MDI) 34 is connected to the bus 35 through a CRT display circuit 29. It is configured so that various setting screens, including setting screens for the core operation setting associated with the present invention, are displayed so that various data can be set by means of numerical data input keys, various function keys, etc. The display unit may be one that uses a liquid crystal.

A RAM 28 for molding data storage that is composed of a nonvolatile memory is a memory that stores molding conditions, various set values, parameters, macro variables, etc. associated with injection molding operation. The RAM 28 is also stored with set data associated with core operations of the present invention, and the core operations are controlled based on the stored set data.

With this arrangement, the PMC-CPU 26 controls the sequential operation of the whole injection molding machine, and the CNC-CPU 27 distributes move commands for the servomotors for the individual axes based on the operation program in the ROM 32 and the molding conditions in the RAM 28 for molding data storage. Further, the servo CPU 22 performs conventional servo control, such as position, speed and current loop control, thereby executing so-called digital servo processing, based on the move commands distributed to the individual axes and feedback signals of positions and speeds detected by the position/speed detectors.

According to the present invention, moreover, the CNC-CPU 27 executes core operation setting processing based on core operation setting software stored in the ROM 32.

FIG. 2 shows a first example of a core operation setting screen associated with mold closing operation displayed on the display unit of the CRT/MDI 34 that is used to set the core operations in the core operation setting device of the present embodiment.

Positions for controlling the core operations (positions of the movable mold) are set in a mold opening completion position, mold closing completion position, and one or more halfway positions (one position in the example of FIG. 2) between those two completion positions. The core operations (core insertion output start, core insertion check, and core insertion output end) for each system are set on the core operation setting screens for the mold opening completion position, mold closing completion position and halfway position.

The core operation setting screens for the mold closing operation is provided with a plurality of (or eight in the example shown in FIG. 2) columns (core operation setting columns 44) for setting core operation items. These columns 44 are situated under a "mold opening completion position" 41, a "halfway position" 42, and a "mold closing completion position" 43, individually.

The "mold opening completion position" 41, "halfway position" 42, and "mold closing completion position" 43 can be set on the core operation setting screen associated with mold closing operation. Since the "mold opening completion position" 41 and the "mold closing completion position" 43 are automatically settled based on mold clamping condition setting, however, numerical values (set positions) can be automatically displayed in them when the core operation setting screen associated with mold closing operation is displayed on the display unit. Although the halfway position 42 can be inputted using the same setting screen, any other condition setting screen may be used for the purpose. While the mold clamping apparatus 10 may or may not be stopped in the "halfway position" 42, the present invention is applicable to either case.

In the example shown in FIG. 2, "300" mm is set as the mold opening completion position 41, "200" mm as the halfway position 42, and "0" mm as the mold closing completion position 43.

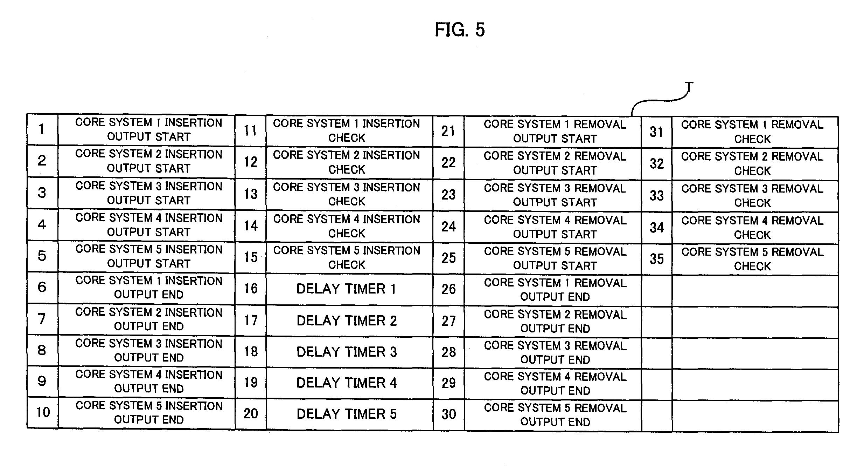

On the other hand, a core operation storage table T shown in FIG. 5 is registered in the RAM 28 for molding data storage. If the core operation setting screen is selected, the CNC-CPU 27 reads the core operation storage table T and loads it into the RAM 33.

The core operation storage table T is loaded with set items (and besides, "delay timer" and the like) for commanding a series of operations of cores in systems 1 to N (N = 5 in the example of FIG. 5), including operations for "core insertion output start," "core insertion check," "core insertion output end," "core removal output start," "core removal check," and "core removal output end."

In the example shown in FIG. 5, "core system i insertion output start" is a set item for commanding a start of operation for inserting a core of a system i (1 ≤ i ≤ N) into the mold, "core system i insertion output end" is a set item for commanding an end of operation for inserting the core of the system i into the mold, and "core system i insertion check" is a set item for commanding a check by means of a limit switch or timer to see if the core is inserted into the mold. "Core system i removal output start" is a set item for commanding a start of operation for removing the core from the mold, "core system i removal output end" is a set item for commanding an end of removal for removing the core from the mold, and "core system i removal check" is a set item for commanding a check by means of the limit switch or timer to see if the core is removed from the mold. Further, there are provided set items "delay timer 1," "delay timer 2," ... for commanding delays for predetermined time periods.

Thereupon, a core operation setting screen associated with mold closing operation shown in FIG. 2 is displayed on the display unit of the CRT/MDI 34, and any of the core operation setting columns 44 is selected by means of a pointing device such as a cursor. By doing this, the set items stored in the core operation storage table T are displayed in a pop-up menu form, and a set item to be set is selected from among them and set.

In the example shown in FIG. 2, set items "core system 1 insertion output start," "core system 1 insertion check," and "core system 1 insertion output end" are set for the "mold opening completion position" 41 in that order. By this setting, the insertion operation for the core system 1 is started at the mold opening completion position 41, and the core insertion is checked. Thereafter (with the passage of a predetermined time period since the start of insertion operation based on a signal from a limit switch or timer), the output of the insertion operation is terminated.

For the "halfway position" 42, moreover, set items "core system 2 insertion output start," "core system 3 insertion output start," "core system 2 insertion check," "core system 3 insertion check," "core system 2 insertion output end," "delay timer 1," and "core system 3 insertion output end" are set in that order. According to this setting example, an output for substantially simultaneous insertion operation for the core systems 2 and 3 is started at the halfway position given by "200" mm. After the insertion of the core systems 2 and 3 is then checked, the output for the insertion of the core system 2 is terminated. Thereafter, only the set time of the delay timer 1 is delayed to terminate the output for the insertion of the core system 2.

For the "mold closing completion position" 43, furthermore, set items "core system 4 insertion output start," "core system 4 insertion check," and "core system 4 insertion output end" are set in that order. In this example, operation for inserting a core of the core system 4 into the mold is started at the mold closing completion position given by "0" mm, the insertion is checked, and the output for the insertion of the core is then terminated.

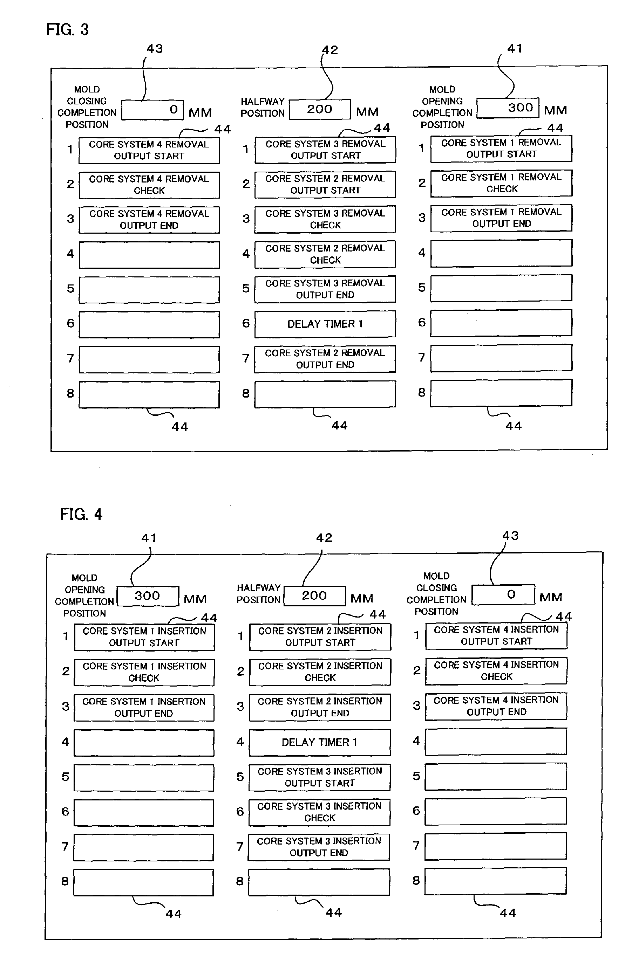

FIG. 3 shows an example of a core operation setting screen associated with mold opening operation displayed on the display unit of the CRT/MDI 34.

In the mold opening operation, operation for removing the core from the mold is set. For the system i (1 ≤ i ≤ N), set items "core system i removal output end," "core system i removal output end," "core system i removal check," and "delay timer" are set corresponding to the mold closing completion position, halfway position and mold opening completion position, respectively. A "halfway position" 42 may be set to a value identical to or different from the "halfway position" 42 (see FIG. 2) for the mold closing operation. In the core operation setting screen associated with the mold opening operation shown in FIG. 3, compared with the core operation setting screen associated with the mold closing operation shown in FIG. 2, the core "insertion" is replaced by the core "removal," and the order of the core systems to be operated in the individual positions is reversed. A further description of the core operation setting screen shown in FIG. 3 will be omitted.

FIG. 4 shows a second example of the core operation setting screen associated with mold closing operation displayed on the display unit of the CRT/MDI 34. This setting example shown in FIG. 4 differs from the first example shown in FIG. 2 in the set item for the halfway position 42, although the two examples share in common the set items associated with the mold opening completion position 41 and the mold closing completion position 43.

According to the setting example associated with the halfway position 42 shown in FIG. 2, the operations for "core system 2 insertion output start" and "core system 3 insertion output start" are performed first and secondly, respectively, and the operations for "core system 2 insertion check" and "core system 3 insertion check" are performed thirdly and fourthly, respectively. After the operation for "core system 2 insertion output end" is then performed fifthly, the operation for "core system 3 insertion output end" is performed with "delay timer 1" set for a time delay.

According to the setting example shown in FIG. 4, on the other hand, the operation for "core system 2 insertion output start" is performed first for the halfway position 42; "core system 2 insertion check" secondly, "core system 2 insertion output end" thirdly, "delay timer 1" fourthly, "core system 3 insertion output start" fifthly, "core system 3 insertion check" sixthly, and "core system 3 insertion output end" seventhly. Thus, the elements "insertion output start," "insertion check," and "insertion output end" that constitute a series of operations associated with the insertion of the core of the system 2 are first set in that order. Thereafter, the delay timer 1 is set, and the elements "insertion output start," "insertion check," and "insertion output end" that constitute a series of operations associated with the insertion of the core of the system 3 are then set in that order.

Thus, according to the present invention, the core system and the operation sequence of the elements that constitute a series of operations associated with the core system concerned can be set optionally. More specifically, a series of core operations is divided into a plurality of elements (operation elements) so that the operation sequence can be set for each divided operation element.

In the setting example shown in FIG. 2, for example, the sixth set item "delay timer 1," among the other set items associated with "halfway position" 42, may be deleted. In this case, the seventh set item "core system 3 insertion output end" (operation for terminating the operation output for the insertion of the core of the system 3), among the other set items associated with "mold closing completion position" 43, may be set first. By doing this, termination of the operation output for the insertion of the core of the system 3 can be executed at the mold closing completion position.

Thus, according to the present invention, the operation for core insertion is not set en bloc for each core system, but is divided into a plurality of elements "core insertion output start," "core insertion check," and "core insertion output end" that can be set independently of one another. Likewise, the operation for core removal is not set en bloc, but is divided into a plurality of elements "core removal output start," "core removal check," and "core removal output end" that can be set independently of one another. In consequence, both the core operation setting for each system in the mold closing operation (FIGS. 2 and 4) and the core operation setting for each system in the mold opening operation (FIG. 3) can be performed precisely and flexibly to meet the forms of the mold and the core.

## Claims

1. A core operation setting device for an injection molding machine, which is used to operate a core at a mold opening completion position, a mold closing completion position and at least one halfway position between the mold opening completion position and the mold closing completion position, the core operation setting device comprising:
means for setting the at least one halfway position between the mold opening completion position and the mold closing completion position;
means for dividing a series of operations of the core into a plurality of operation elements and storing a plurality of set items constituted by combination of the system of a core and the operation elements of the core; and
means for successively taking out necessary set items from the storage means with respect to the mold opening completion position, the mold closing completion position and the halfway position, thereby designating an operation sequence for the set items for each said position.

2. The core operation setting device for an injection molding machine according to claim 1, wherein the operation elements include at least starts and ends of removal and insertion operations for the core and checks of the operations.

3. The core operation setting device for an injection molding machine according to claim 1, wherein the operation elements further include a plurality of types of delay timers.
